# EUROPÄISCHE PATENTSCHRIFT

(11) **EP 3 128 829 B1**
(45) Veröffentlichungstag und Bekanntmachung des Hinweises auf die Patenterteilung: **30.08.2017**
(21) Anmeldenummer: 14823878.5
(22) Anmeldetag: 23.10.2014
(51) Int. Cl.: A01D 65/02

(54) **BEFESTIGUNGSVORRICHTUNG ZUR MONTAGE EINES ÄHRENHEBERS**
FASTENING DEVICE FOR MOUNTING A CROP LIFTER
DISPOSITIF DE FIXATION POUR LE MONTAGE D'UN RELEVEUR D'ÉPIS

(30) Priorität: 25.10.2013 AT 506932013
(43) Veröffentlichungstag der Anmeldung: 15.02.2017
(73) Patentinhaber: Röchling Leripa Papertech GmbH & Co. KG, 4151 Öpping (AT)
(72) Erfinder: KEINBERGER, Rüdiger, 4160 Aigen (AT); ECKERSTORFER, Peter, 4151 Öpping (AT); ECKER, Markus, 4151 Oepping (AT); GUMPENBERGER, Helmut, 4150 Rohrbach (AT)
(74) Vertreter: Burgstaller, Peter
(86) Internationale Anmeldenummer: PCT/AT2014/050255
(87) Internationale Veröffentlichungsnummer: WO 2015/058230

(56) Entgegenhaltungen:
- DE-A1- 10 113 107
- DE-A1- 10 128 101
- DE-C1- 3 912 414

## Beschreibung

Die Erfindung betrifft eine Befestigungsvorrichtung zur Montage eines Ährenhebers an einer fahrbaren Erntemaschine wie typischerweise einem Mähdrescher sowie einen damit ausgestatteten Ährenheber.

Bei üblichen Mähdreschern sind entlang des Mähbalkens verteilt Mähfinger angeordnet, die den Messerbalken führen und die Gegenschneide für die bewegten Mähklingen bilden. Die Mähfinger sind üblicherweise über eine Schraube am Mähbalken angebracht. Zwischen Mähfingern und Mähklingen wird bestimmungsgemäß das Mähgut, typischerweise also die Halme von Getreidepflanzen, abgeschnitten. Um auch abgeknicktes am Untergrund liegendes Mähgut mähen zu können, werden Ährenheber verwendet, welche das Mähgut anheben bevor es in den Bereich des Messerbalkens gelangt.

Die Ährenheber erstrecken sich dazu in Fahrtrichtung an der fahrbaren Erntemaschine vor die Mähklingen. Ihre vordere, obere Fläche ist als schiefe Ebene ausgebildet, welche entgegen der Fahrtrichtung der Erntemaschine etwa vom Niveau des Untergrundes aus über das Niveau der Mähklingen ansteigt. In der horizontal, quer zur Fahrtrichtung liegenden Richtung sind Ährenheber schmal ausgebildet und eine Mehrzahl von Ährenhebern ist in dieser Richtung in einem kleinen Abstand nebeneinander angeordnet, sodass die Ährenheber bei Fahrt der Erntemaschine wie die Zähne eines Kammes zwischen die Halme des Mähgutes bewegt werden.

Die DE 10357178 A1 und die DE 202005003355 U1 zeigen Ährenheber, wie sie gegenwärtig verbreitet eingesetzt werden. Vom Mähwerk aus ragt leicht nach unten geneigt und etwas geschwungen ein Träger aus flachem Federstahl nach vorne. Am vorderen Ende dieses Trägers ist ein Rampenteil befestigt, welcher von der Befestigungsstelle aus nach hinten oben ragt und die zuvor beschriebene schiefe Ebene bildet. Der Träger ist in einer vertikalen Ebene durch Biegung elastisch verformbar. Er streift oftmals am Untergrund und wird durch lokale Erhebungen am Untergrund elastisch nach oben gebogen. An jenem Längsbereich seiner Unterseite, mit der er am öftesten am Untergrund schleift, ist der Träger mit einer Verschleißplattierung versehen. Der Träger ist an seinem hinteren Ende mit einer Nut ausgestattet, welche über die Befestigungsschraube des Mähfingers geschoben und dort mechanisch fixiert wird. Im Bereich der Spitze des Mähfingers ist auf dem Träger ein Befestigungselement angebracht, welches den Ährenheber am Mähfinger abstützt. Dadurch kann der Ährenheber nach oben gegen die Federwirkung des Trägers gedrückt werden, nach unten hin ist die Bewegungsfreiheit über das Befestigungselement, welches auf der Oberseite des Mähfingers anliegt begrenzt. Das Befestigungselement ist mit dem Träger verschraubt. Der Rampenteil, welcher die besagte schiefe Ebene bildet und bestimmungsgemäß nur mit Mähgut in Berührung kommt, wurde früher vorwiegend aus Stahl gefertigt. In jüngerer Zeit verwendet man dafür vermehrt auch andere Materialien, beispielsweise abriebfesten Kunststoff wie in der DE 3904350 (A1) gezeigt.

In der AT 509579 B1 wird eine Bauweise wie bei der DE 10357178 A1 und die DE 202005003355 U1 beschrieben, wonach der Ährenheber aus einem Rampenteil und einem Träger gebildet ist, wobei sich der Träger unterhalb des Rampenteils vom Mähwerk der fahrbaren Erntemaschine aus vorwiegend horizontal nach vorne erstreckt, mit seinem hinteren Ende mit der Erntemaschine verbunden ist und mit seinem vorderen Ende mit dem unteren Ende des Rampenteils verbunden ist. Dabei sind Träger und den Rampenteil zur Gänze und bevorzugt aus einem gemeinsamen monolithischen Teil aus verschleißfestem Kunststoff ausgebildet, wie Polyethylen, mit einer mittleren Molmasse von mindestens 500 kg/mol also hochmolekulares oder ultrahochmolekulares Polyethylen, sowie mit Füllstoff verstärkte Polyurethane. Diese Bauweise hat den Vorteil, dass der Ährenheber eine gute Hebewirkung auch für stark niedergedrücktes Mähgut aufweist, leicht aber dennoch robust ist und im Fall dass er dennoch versagt, eine geringere Beschädigungsgefahr für andere Teile der Erntemaschine darstellt, als dies bei Ährenhebern in Stahlausführung der Fall ist.

Die DE 2835505 A1 beschreibt ein Halteelement in Form eines U-förmigen Haltebügels, das dazu dient den Ährenheber in vorgespannten Zustand am Mähfinger, bzw. Mähbalken festzulegen und mit einem Sperrbolzen zu sichern. Allen Ausführungsformen der DE 2835505 A1 ist gemeinsam der U-förmige Haltebügel für die seitliche Führung des Tragschenkels und die ohne zusätzliches Werkzeug zu betätigende Sperre, die über der Mähfingerspitze liegt und entgegen der Federkraft des vorgespannten Tragschenkels auf die Mähfingerspitze drückt und so den Tragschenkel festhält. Die Mähfingerspitze kann sich dabei zwischen dem Sperrbolzen und dem Tragschenkel in vertikaler Richtung bewegen, wodurch das Hochfedern des Tragschenkels begünstigt wird. Im hochgebogenen Zustand des Tragschenkels kann der Sperrbolzen ausgeklinkt, herausgezogen oder soweit verschoben werden, dass der Sperrbolzen wirkungslos wird und der Ährenheber, die Tragkufe oder der Tragkufenährenheber abgenommen werden kann.

Die US 1818335 A zeigt ein Befestigungssystem für einen Ährenheber an einem Mähwerk einer fahrbaren Erntemaschine. Der Ährenheber umfasst einen Rampenteil und einen zweigeteilten Träger, wobei der hintere Teil des Trägers bezüglich des Mähwerks fixiert ist und der vordere Teil des Trägers bezüglich des hinteren Teils des Trägers beweglich ausgeführt ist. Der hintere, starre Teil des Trägers ist an seinem hinteren Ende mit dem Mähwerk verschraubt und weist an seinem vorderen Ende ein bügelförmiges Halteelement auf, welches den Mähfinger übergreift. Der vordere, bewegliche Teil des Trägers ist durch eine Zugfeder vorgespannt, wobei die durch die Zugfeder verursachte Bewegung des vorderen, beweglichen Teils des Trägers Richtung Boden durch einen Bolzen, welcher am hinteren, starren Teil des Trägers zur Anlage kommt, beschränkt ist. Ein schwenkbarer Haken kann zwischen dem Bolzen und dem hinteren Teil des Trägers platziert werden, um die durch die Feder verursachte Bewegung Richtung Boden weiter zu verkürzen. Somit ist der Winkel des vorderen, beweglichen Teils des Trägers zum Boden einstellbar.

Die EP 1061791 B1 zeigt ein Ährenheber, der eine Tragschiene, die mit dem Mähbalken verbindbar ist, einen Halmheber, der mit der Tragschiene verbunden ist, das ein an der Tragschiene angebrachtes Halteelement aufweist, das zwei beabstandete Schenkel besitzt, zwischen die die Spitze eines Mähfingers einführbar ist, das einen Sperrhebel, welcher um einen Schwenkzapfen schwenkbar zwischen den beiden Schenkeln gelagert ist und der einen ersten Hebelarm mit einer Stützfläche, die zur Abstützung mit einer Oberseite des Mähfingers in Kontakt bringbar ist, und einen zweiten Hebelarm mit mindestens einer Rastfläche aufweist, und das ein Sperrelement besitzt, welches mit einer Rastfläche des Sperrhebels in Kontakt tritt und den Sperrhebel gegen Verlagerung hält, umfasst.

Von Vorteil gegenüber der DE 2835505 A1 ist, dass bei der Ausrichtung des Ährenhebers ausgehend von der gelösten Stellung die Mähfingerspitze auf einen der Hebelarme auftrifft und dabei eine Verschwenkung des Sperrhebels zur Sperrstellung einleitet. Zur Überführung des Sperrhebels in die gewünschte Stellung kann durch Anheben des über die Mähfingerspitze vorstehenden Bereiches des Ährenhebers mit einer Hand und durch Drücken mit der anderen Hand auf den zweiten Arm des Sperrhebels, dieser in Kontakt mit dem Sperrelement gebracht werden. Es sind keine Bauteile vorhanden, die verloren gehen können. Darüber hinaus ist es nicht erforderlich, die richtige Stellung zu finden, um die Sperrstange durch die Bohrungen des Bohrungspaars hindurchführen zu können, wie dies bei der DE 2835505 A1 erforderlich ist. Nachteilig ist, dass sich das Sperrelement nicht zwangsläufig im Schwenkbereich des Sperrhebels befindet, dadurch kann es vorkommen, dass während dem Betrieb der Sperrhebel aus der Rastfläche des Sperrelements geschlagen werden kann oder umgekehrt, besonders gilt dies wenn der Ährenheber durch eine Bodenunebenheit nach oben gedrückt wird und der Kontakt von Spannhebel und Mähfinger verloren geht, da dann die Kraft der Vorspannung, welche den Spannhebel gegen das Sperrelement drückt verloren geht. Zudem werden Schläge vom Mähfinger über den Sperrhebel direkt auf das Sperrelement übertragen, wodurch dieses stark beansprucht wird. In den Fig. 8 - 10 der EP 1061791 B1 ist eine alternative Spannvorrichtung gezeigt, wobei hier der Spannhebel mit Federkraft in radialer Richtung vom Schwenkzapfen weg gegen einen Anschlag gedrückt wird. Nachteilig ist hier, dass bei überwinden dieser Federkraft, z.B. durch einen auf den Hebel wirkenden Schlag, der Spannhebel entsichert werden kann, was ein Lösen des Ährenhebers während des Betriebs zur Folge hätte.

Die der Erfindung zu Grunde liegende Aufgabe besteht darin einen Schnellverschluss für einen Ährenheber bereit zu stellen, der gegenüber der EP 1061791 B1 dahingehend verbessert ist, dass die Betriebssicherheit verbessert wird, indem ein unbeabsichtigtes Lösen des Spannhebels während des Betriebs ausgeschlossen wird. Zudem soll der Schnellverschluss robuster aufgebaut und in der Handhabung einfacher sein.

Zum Lösen der Aufgabe wird von einer Bauweise wie bei der EP 1061791 B1 ausgegangen, wonach der Ährenheber zumindest aus einem Rampenteil und einem Träger mit Befestigungselement gebildet ist, wobei sich der Träger unterhalb des Rampenteils vom Mähwerk der fahrbaren Erntemaschine aus vorwiegend horizontal nach vorne erstreckt, mit seinem hinteren Ende mit der Erntemaschine verbunden ist und mit seinem vorderen Ende mit dem unteren Ende des Rampenteils verbunden ist. Das Befestigungselement ist mit dem Träger verbunden und ist am Mähfinger festlegbar. Das Befestigungselement hat zwei beabstandete Schenkel, zwischen die die Spitze eines Mähfingers einführbar ist.
Erfindungsgemäß ist vorgesehen, im Zwischenraum zwischen den beiden beabstandeten Schenkeln des Befestigungselements einen Exzenterspanner anzubringen, wobei der Exzenterspanner gegenüber dem Sperrhebel der EP 1061791 B1 entscheidende, vorteilhafte Merkmale aufweist, welche in der speziellen Formgebung und dem Zusammenspiel mit dem Befestigungselement liegen.

Die erste Neuerung liegt darin, dass sich die Stützfläche des Befestigungselements jedenfalls im Schwenkbereich des Exzenterspanners befindet, wodurch ein Herausschlagen des Exzenterspanners, bzw. des Verriegelungselements aus der Verriegelungsposition ausgeschlossen werden kann. Zudem wird der Exzenterspanner im Betrieb auch unabhängig von der durch Vorspannung des Ährenhebers bewirkten Kraft in der Verriegelungsposition gehalten. Eine weitere Neuerung besteht darin, dass die Kraftübertragung vom Mähfinger direkt über die Auflagefläche am Exzenterspanner auf die Stützfläche des Befestigungselements erfolgt und diese Kraft nicht über den Schwenkzapfen umgelenkt wird, bzw. auf den Schwenkzapfen wirkt.

Die Verbesserung gegenüber dem Stand der Technik wird konkret durch die technischen Merkmale bestimmt, dass die Auflagefläche für den Mähfinger und die Sperrfläche gegenüberliegend an einem Hebelarm des Exzenterspanners angeordnet sind und dass sich die Stützfläche des Befestigungselements ortsfest im Schwenkradius des Exzenterspanners befindet und dass der Exzenterspanner in der Verriegelungsposition, bevorzugt durch eine in Umfangsrichtung des Schwenkzapfens wirkende Federkraft, gehalten wird.

Der Exzenterspanner ist aus Metall oder aus Kunststoff, insbesondere einem verschleißfesten Kunststoff gebildet.

Das Befestigungselement ist ebenfalls aus Metall oder aus Kunststoff, insbesondere einem verschleißfesten Kunststoff gebildet. Der Träger ist aus Federstahl einer anderen Metalllegierung oder einem verschleißfesten Kunststoff gebildet.

In einer bevorzugten Ausführungsform bilden der Rampenteil, das Befestigungselement und vorzugsweise eine Verschleißplattierung und gegebenenfalls auch der Träger gemeinsam ein Kunststoffteil, wobei bevorzugt verschleißfeste Kunststoffe zur Verwendung kommen.

Bevorzugt dazu verwendbare verschleißfeste Kunststoffe sind Polyethylen, mit einer mittleren Molmasse von mindestens 500 kg/mol, insbesondere mindestens 1000 kg/mol also hochmolekulares oder ultrahochmolekulares Polyethylen sowie mit Füllstoff verstärkte Polyurethane.

Die Erfindung wird an Hand von Zeichnungen veranschaulicht:
- Fig. 1:: zeigt einen beispielhaften Ährenheber mit dem erfindungsgemäßen Schnellverriegelungssystem in Seitenansicht.
- Fig. 2:: zeigt das erfindungsgemäße Schnellverriegelungssystem in seitlicher Schnittansicht.
- Fig. 3:: zeigt das erfindungsgemäße Schnellverriegelungssystem von vorne in Fahrtrichtung der Erntemaschine gesehen.
- Fig. 4:: Zeigt den ersten Schritt für das Befestigen eines bevorzugten, mit dem erfindungsgemäßen Schnellverriegelungssystem ausgestatteten Ährenhebers.
- Fig. 5:: Zeigt den zweiten Schritt für das Befestigen eines bevorzugten, mit dem erfindungsgemäßen Schnellverriegelungssystem ausgestatteten Ährenhebers.
- Fig. 6:: Zeigt einen bevorzugten, mit dem erfindungsgemäßen Schnellverriegelungssystem ausgestatteten Ährenheber im verriegelten Zustand.

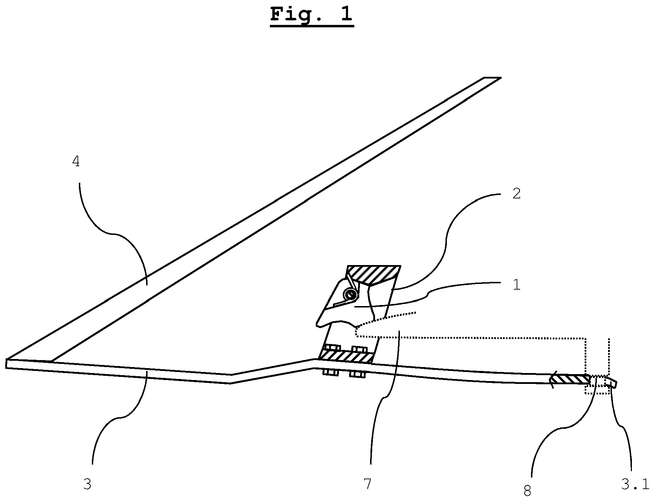

In der Darstellung gemäß Fig. 1 ist die Fahrtrichtung der fahrbaren Erntemaschine von rechts nach links. Der Ährenheber weist einen unten liegenden, im Wesentlichen horizontal ausgerichteten Träger 3 aus Federstahl oder einer anderen Metalllegierung, einen darüber liegende Rampenteil 4 und ein Befestigungselement 2 auf.

Der Träger 3 ist mittels eines Verbindungselements 3.1 an einem starren Teil der Erntemaschine, typischerweise einem stillstehenden Teil des Mähwerks befestigt. Diese Befestigung ist derart ausgebildet, dass der vordere Teil des Trägers 3 relativ zum starren Teil der Erntemaschine gut nach oben gebogen werden kann, gegen Biegung nach unten jedoch fest und steif gehalten wird.

Die Biegefähigkeit nach oben ist erforderlich, damit der Ährenheber im Fall von lokalen Bodenerhebungen elastisch nach oben ausweichen kann; Biegung nach unten ist hingegen gefährlich, da sich damit der Ährenheber in den Untergrund eingraben würde und daraufhin zerstört würde.

Der Träger 3 weist an seinem hinteren Ende ein Verbindungselement 3.1, welches als Nut ausgebildet ist, auf, welches über eine Ausnehmung 8 am Mähbalken, insbesondere einer an der Befestigungsschraube des Mähfingers 7 befestigten Hülse, geschoben werden kann. Die Befestigungsschraube des Mähfingers 7 dient zur ortsfesten Befestigung des Mähfingers 7 am Mähbalken. Die Spitze des Mähfingers 7 und die Ausnehmung 8 sind bezüglich des Mähbalkens ortsfest fixiert und bilden die Angriffspunkte für die Dreipunkteinspannung des Ährenhebers. Der Mähfinger 7 und die Ausnehmung 8 sind in den Figuren punktiert angedeutet.

Im dargestellten Beispiel der Fig. 1 ist der Träger 3 durch die Dreipunkteinspannung zur Biegung in jene Krümmungsrichtung elastisch vorgespannt, in welche er im Betrieb noch biegbar sein soll und gegen Krümmung in die entgegengesetzte - unerwünschte - Richtung durch das Befestigungselement 2, genauer gesagt durch den im Befestigungselement 2 angeordneten Exzenterspanner 1, gesperrt. Am hinteren Ende ist der Ährenheber durch die Vorspannung gegen Abziehen von der Ausnehmung 8 gesichert. Um diesen Effekt zu verstärken, ist der Träger 3 an seinem Ende abgewinkelt ausgeführt, wodurch im vorgespannten Zustand dieses abgewinkelte Ende mit dem an die Ausnehmung 8 anschließenden breiteren Bereich verhakt.

Für weitere Biegung des Trägers 3 in die "erwünschte" Krümmungsrichtung weist das Befestigungselement 2 eine Freistellung auf. Der Ährenheber ist gegen seitliches Verlagern, oder Verwinden durch die Schenkel 2.3, 2.4 am Mähfinger 7 gesichert.

Das Befestigungselement 2 ist an seinem unteren Ende beispielsweise mit Schrauben mit dem Träger 3 verbunden, oder mit diesem verschweißt oder auf sonstige geeignete Weise verbunden.

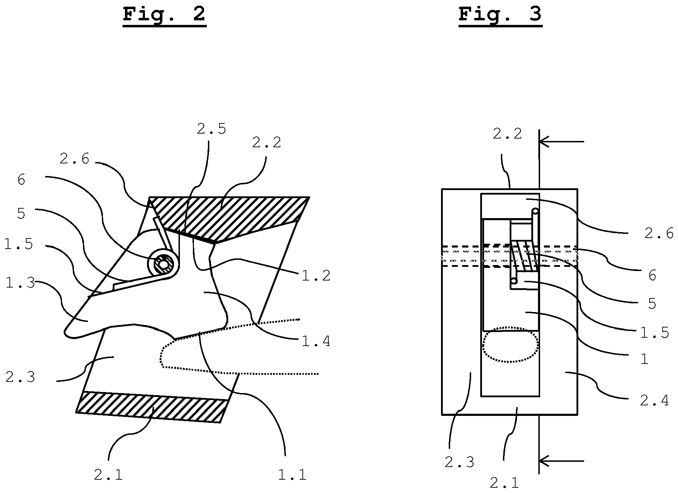

In den Fig. 2 und 3 ist der Aufbau des Befestigungselements 2 am besten erkennbar. Den unteren Teil des Befestigungselements 2 bildet der Grundkörper 2.1, mit welchem es mit dem Träger 3 verbunden ist. Von diesem Grundkörper erstecken sich zwei Schenkel 2.3, 2.4 nach oben, wobei diese an ihrem oberen Ende über den Steg 2.2 verbunden sind. Der Steg 2.2 weist an seiner der Grundplatte zugewandten Seite vorzugsweise drei Flächenabschnitte auf. In Fahrtrichtung gesehen vorne ist die Fläche 2.6 angeordnet, diese dient zur Abstützung eines Schenkels der Feder 5. Die Dicke des Steges 2.2 nimmt entlang der Fläche 2,6 von vorne nach hinten betrachtet linear zu. An die Fläche 2.6 schließt die Stützfläche 2.5 an, die Dicke des Steges 2.2 nimmt entlang der Fläche 2,6 von vorne nach hinten betrachtet linear zu, jedoch geringer als bei der Fläche 2.6. Anschließend an die Stützfläche 2.5 nimmt die Dicke des Steges 2.2 von vorne nach hinten betrachtet linear ab, um das Einführen, bzw. das Entfernen des Mähfingers 7 zwischen die Schenkel 2.3, 2,4 zu erleichtern.

Die beiden Schenkel 2.3, 2.4 weisen eine Bohrung auf welche die beiden Schenkel 2.3, 2.4 von der Seite her gesehen deckungsgleich durchdringt. In diese Bohrung ist der Schwenkbolzen 6 eingesetzt. Bevorzugt ist dieser als Spannstift (z.B. nach ISO 8752) ausgestaltet. Der Spannstift verspreizt sich in der Bohrung und ist somit mit den Schenkeln 2.3, 2.4 kraftschlüssig verbunden. Dies hat den Vorteil, dass der Spannstift in der Bohrung fixiert ist und somit nicht herausrutschen kann. Der Spannstift ist in der Bohrung nicht, bzw. nur mit hohem Kraftaufwand drehbar, was jedoch nicht erforderlich ist, wenn die Bohrung durch den Exzenterspanner 1 einen etwas größeren Durchmesser als die Bohrung durch die Schenkel 2.3, 2.4 aufweist.

Der Exzenterspanner 1 ist zwischen den beiden Schenkeln 2.3, 2.4 angeordnet und bezüglich des Schwenkbolzens 6 drehbar gelagert. Der Exzenterspanner 1 ist bevorzug als eine Platte mit konstanter Dicke und parallelen Flächen gebildet, die eine Ausnehmung für die Feder 5 und eine Bohrung zur Aufnahme des Schwenkbolzens 6 aufweist.

Von der Seite gesehen weist der Exzenterspanner 1 zwei Hebelarme 1.4, 1.3 auf, wobei der erste Hebelarm 1.4 im verriegelten Zustand des Ährenhebers sich in Fahrtrichtung gesehen nach hinten erstreckt und der zweite Hebelarm 1.3 nach vorne. Der erste Hebelarm 1.4 weist eine erst Fläche, die Auflagefläche 1.1 auf, mit welcher der Ährenheber am Mähfinger 7 aufliegt. Gegenüber dieser Auflagefläche 1.1 ist am selben Hebelarm 1.4 die Sperrfläche 1.2 angeordnet. Die Auflagefläche 1.1 weist an ihrem hintern Bereich einen größeren Abstand zum Drehpunkt des Exzenterspanners 1 auf als in ihrem vorderen. Zwischen der Auflagefläche 1.1 und der Sperrfläche 1.2 weist der Mantel des Exzenterspanners 1 einen bevorzugt geschwungenen Bereich auf, wobei der Abstand des geschwungenen Bereichs zum Drehpunkt des Exzenterspanners 1 angrenzend an die Auflagefläche 1.1 am größten ist und in Richtung der Sperrfläche 1.2 abnimmt. Die Sperrfläche 1.2 weist ebenfalls an ihrem hinteren Ende einen größeren Abstand zum Drehpunkt des Exzenterspanners auf als in ihrem vorderen. Die Sperrfläche 1.2 liegt im verriegelten Zustand bündig an der Stützfläche 2.5 des Befestigungselements 2 an. Dadurch wird ein weiteres Schwenken des hinteren Hebelarmes 1.4 des Exzenterspanners 1 nach oben unterbunden.

Am vorderen Ende der Sperrfläche 1.2 geht der Mantel des Exzenterspanners 1 in Form eines Bogens in den vorderen Hebelarm 1.3 über, wobei der Bogen bevorzugt einen konstanten Radialabstand zum Drehpunkt des Exzenterspanners 1 aufweist, wobei dieser Radialabstand dem Abstand des vorderen Endes der Sperrfläche 1.2 zum Drehpunkt des Exzenterspanners 1 entspricht und dieser Radialabstand geringer ist als der geringste Abstand der Stützfläche 2.5 zum Drehpunkt des Exzenterspanners 1. Durch diese Ausgestaltung kann der hintere Hebelarm 1.4 des Exzenterspanners 1 ausgehend von der Verriegelungsposition nach unten geschwenkt werden. Der vordere Hebelarm 1.3 ist als Spannhahn ausgebildet und dient dazu einen Angriffspunkt für den Benutzer, der den Ährenheber montieren oder demontieren möchte, bereit zu stellen. Der über den Bogen an die Sperrfläche 1.2 anschließende Umfangsbereich des vorderen Hebelarms 1.3 ist bevorzugt als eine Gerade bzw. als eine ebene Mantelfläche ausgebildet. Am vorderen Ende des vorderen Hebelarms 1.3 geht diese ebene Mantelfläche in einem spitzen Winkel in eine geschwungene Fläche über, welche bezüglich des Exzenterspanners 1 nach innen gewölbt ist. Besagte geschwungene Fläche bildet den unteren Übergang vom vorderen Hebelarm 1.3 zum hinteren Hebelarm 1.4 und geht an ihrem hinteren Ende bevorzugt in einem stumpfen Winkel in die Auflagefläche 1.1 über.

Im Bereich des Schwenkbolzens 6 weist der Exzenterspanner 1 eine Ausnehmung auf, welche zur Aufnahme der Feder 5 dient. Die Feder 5 ist als Torsionsfeder, auch als Drehfeder bezeichnet, ausgeführt. Die Ausnehmung erstreckt sich beispielsweise von einer Seitenfläche des Exzenterspanners 1 bis zirka zur Mitte der Platte aus welcher dieser gebildet ist. Die Ausnehmung kann bei Bedarf weniger tief oder tiefer ausgebildet sein um eine längere oder kürzere Feder (Anzahl der Windungen, bzw. Durchmesser des Federdrahtes) aufnehmen zu können. Es wäre auch denkbar die Ausnehmung zentral in der Platte des Exzenterspanners 1 anzubringen, wodurch die Feder 5 beidseitig von Schenkeln des Exzenterspanners 1 umschlossen wäre.

Die Windungen der Feder 5 sind um den Schwenkbolzen 6 angeordnet. Ein Schenkel der Feder 5 liegt an der Fläche 2.6 des Befestigungselements 2 auf, der andere an der Fläche 1.5 der Ausnehmung des Exzenterspanners 1. Im Verriegelungszustand ist die Feder 5 bereits etwas gespannt, wodurch der Exzenterspanner 1 in seiner Position durch die Federkraft gesichert ist. Anders gesagt wird die Sperrfläche 1.2 durch die in Umfangsrichtung wirkende Federkraft gegen die Stützfläche 2.5 gedrückt. Um den Exzenterspanner 1 aus der Verriegelungsposition zu lösen ist es nötig, die Feder 5 weiter zu spannen.

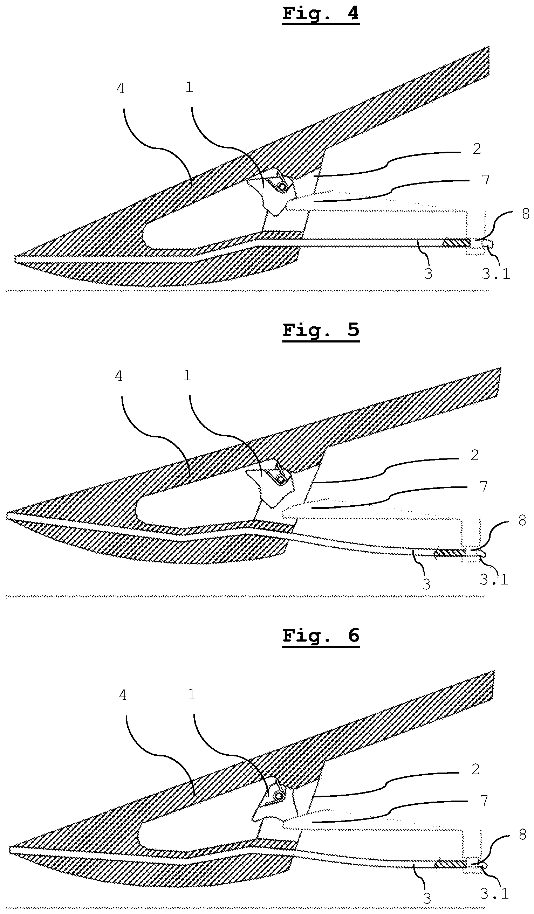

In den Fig. 4 bis 6 ist eine besonders vorteilhafte Variante des Ährenhebers gezeigt. Der vordere untere Oberflächenbereich des Ährenhebers ist konvex nach unten gewölbt und wird durch die Verschleißplattierung gebildet, mit der der Ährenheber bestimmungsgemäß im Betrieb am Untergrund gleitet. Diese besonders auf Verschleiß beanspruchte Zone, aus der zwangsläufig während des Betriebes Material abgetragen wird, kann durch einen separaten, vorteilhafter Weise möglichst einfach austauschbar montierten Plattierungsteil aus besonders gut verschleißfestem Material gebildet sein. In einer vorteilhaften Ausführungsform besteht nur diese Verschleißplattierung aus ultrahochmolekularem Polyethylen, während Rampe 2 und Befestigungselement 3 des Ährenhebers im Übrigen aus hochmolekularem Polyethylen oder nur aus mit Füllstoff verstärktem Polyurethan bestehen. Im Beispiel nach den Fig. 4 - 6 sind der Rampenteil 4, das Befestigungselement 2 und die Verschleißplattierung als ein monolithischer Kunststoffteil gebildet. Dabei ist das obere Ende des Befestigungselements 2 mit dem Rampenteil 4 verbunden und das unteren Ende des Befestigungselements 2 mit der Verschleißplattierung. Der Rampenteil 4 ist an seinem unteren Ende mit der Verschleißplattierung verbunden. So ergibt sich für den Kunststoffteil eine dreieckige Grundform, wobei der Träger 3 vom unteren Schenkel des Dreiecks umschlossen ist. Somit liegt der Träger 3 nur an seiner vorderen Spitze und im Bereich zwischen seinem hinteren Ende und dem Befestigungselement 2 frei. Die vordere Spitze des dargestellten Ährenhebers, ist überwiegend durch frontal anstoßende Gegenstände, beispielsweise Steine beansprucht. Sie ist durch die Spitze des Trägers 3 und somit aus Stahl oder einer anderen Metalllegierung gebildet. In seinem vom Kunststoffteil umschlossenen Teil weist der Träger 3 einen abgewinkelten Bereich auf, sodass der Träger 3 formschlüssig mit dem Kunststoffteil verbunden ist. Vorteilhaft an dieser Ausgestaltung ist, dass die Biegefestigkeit des Trägers 3 im Bereich vor dem Befestigungselement 2 durch den Kunststoffteil erhöht wird. Dadurch wird erreicht, dass der Träger 3 im Betrieb nur in seinem hinteren, freiliegenden Bereich verbogen werden kann. Die Biegung im hinteren Bereich kann aufgrund der Dreipunkteinspannung nur nach oben erfolgen. Durch die dreieckige Ausgestaltung des Kunststoffteils wird somit verhindert, dass sich der Träger 3 in seinem vorderen Bereich nach unten biegen könnte und somit in Erdreich eingraben könnte. Somit kann der Träger 3 in seinem vorderen Bereich die gleiche Dicke und vergleichbaren Elastizität wie im hinteren Bereich aufweisen, was die Ausgestaltung und Fertigung des Trägers 3 deutlich vereinfacht. Ein weiterer Vorteil der in den Fig. 4 und 6 gezeigten Variante ist, dass der Träger 3 im Bereich des Befestigungselements 2 keine Bohrungen zur Aufnahme von Schrauben aufzuweisen braucht.

Durch den freigestellten Bereich im Zentrum des aus Rampenteil 4, Verschleißplattierung und Befestigungselement 2 gebildeten Dreiecks, wird die Montage des Ährenhebers erleichtert. Der Benutzer kann mit einer Hand den an die Freistellung anschließenden Teil des Rampenteils 4 umfassen. Die Steigung des Rampenteils 4 ist dementsprechend flach ausgeführt, bzw. ist der Exzenterspanner 1 dementsprechend hoch im Befestigungselement 2 angebracht, dass der Benutzer mit dem Zeigefinger der den Rampenteil 4 haltenden Hand zugleich den Spannhahn des Exzenterspanners 1 bedienen kann. Somit ist eine einfache einhändige Montage und Demontage des Ährenhebers möglich.

Die Fig. 4-6 zeigen die schrittweise Vorgehensweise zur Montage des Ährenhebers.

Zuerst nimmt der Benutzer den Ährenheber mit einer Hand am Rampenteil 4 und zieht mit dem Zeigefinger den Spannhahn nach oben, wodurch die Sperrfläche 1.2 von der Stützfläche 2.5 weg nach unten geschwenkt wird. Die Auflagefläche 1.1 wird nach unten vorne geschwenkt. Der Benutzer zieht den Spannhahn soweit es geht nach oben und hält den Exzenterspanner 1 in dieser Position. Der Schwenkbereich des Spannhahns wird dadurch begrenzt, dass dieser mit dem Rampenteil 4 oder der Fläche 2.6 des Befestigungselements 2 in Berührung kommt.

Im nächsten Schritt führt der Benutzer den Ährenheber mit der am hinteren Ende des Trägers 3 befindlichen Nut 3.1 in die Ausnehmung 8 am Mähbalken und zeitgleich den Mähfinger 7 zwischen die beiden Schenkeln 2.3, 2.4 des Befestigungselements 2 ein. Diese Position ist in Fig. 4 gezeigt. Der Träger 3 ist noch nicht vorgespannt und der Mähfinger 7 befindet sich im Raum, welcher seitlich durch die beiden Schenkel 2.3, 2.4, nach oben hin durch die geschwungene Fläche des Exzenterspanners 1, welche sich zwischen der Auflagefläche 1.1 und der Sperrfläche 1.2 befindet und nach unten hin durch den Grundkörper 2.1 des Befestigungselements 2 begrenzt ist.

In Fig. 5 ist der nächste Schritt gezeigt, bei welchem der Ährenheber durch den Benutzer angehoben wird, wodurch der Träger 3 nach oben gebogen und somit gespannt wird. Der Ährenheber wird soweit angehoben, dass der Mähfinger 7 einen weiteren Radialabstand zum Drehpunkt des Exzenterspanners 1 aufweist als das Ende der Auflagefläche 1.1 mit dem maximalen Radialabstand zum Drehpunkt. Nun löst der Benutzer den Spannhahn, wodurch der Exzenterspanner 1 durch die Feder 5 am Mähfinger 7 vorbei in den Verriegelungszustand überführt wird.

Der Benutzer kann nun den Ährenheber nach unten bewegen, bis dieser mit der Auflagefläche 1.1 am Mähfinger 7 anliegt, oder er lässt ihn einfach los, wodurch der Ährenheber auch die in Fig. 6 gezeigte Position einnimmt. Die in Fig. 6 gezeigte Position ist die Betriebsposition. In dieser Position ist der Träger 3 vorgespannt, wodurch dieser gegen Abziehen vom Mähbalken gesichert ist. Eine weitere Biegung des Ährenhebers nach oben ist durch den Freiraum zwischen der Unterseite der Spitze des Mähfingers 7 und dem Grundkörper 2.1 möglich. Eine Biegung des Ährenhebers nach unten, wird durch das Anliegen des Mähfingers 7 an der Auflagefläche 1.1 unterbunden.

Als Verallgemeinerung wäre denkbar, den Exzenterspanner ohne den vorderen Hebelarm 1.3 bzw. Spannhahn auszubilden. Dazu wäre es nötig die erforderliche Kraft zum Bewegen des Exzenterspanners 1 aus der Verriegelungsposition an einem anderen Punkt aufzubringen. Beispielsweise könnte dies durch Anbringen eines Seilzugs erfolgen, wobei das eine Ende des Seils an einer Bohrung im hinteren Eckbereich des hinteren Hebelarms 1.4 ansetzt und das andere Ende des Seils an einem Hebel am Rampenteil 4 befestigt ist, wobei das Seil gegebenenfalls an einem Punkt zwischen seinen beiden Enden umgelenkt wird. Ein solcher Mechanismus wäre vorteilhaft, wenn aufgrund einer stärkeren Steigung des Rampenteils 4 dieser weiter entfernt vom Exzenterspanner 1 ist, um eine einhändige Bedienung dennoch zu ermöglichen.

Als weitere Verallgemeinerung kann die Feder 5 durch ein anderes Element ersetzt werden, welches dazu in der Lage ist den Exzenterspanner 1 in der Verriegelungsposition zu halten. Zum Bespiel könnte dies Kraft durch einen Magneten aufgebracht werden, oder durch die Schwerkraft, wenn der vordere Hebelarm 1.3 schwerer ausgeführt ist als der hintere Hebelarm 1.4. Auch eine manuelle Verriegelung über einen Haken wäre denkbar. Der Einsatz einer Feder 5 ist jedoch bevorzugt, da diese beim Loslassen des Exzenterspanners 1 automatisch dafür sorgt, dass dieser die Verriegelungsposition rasch einnimmt und diese somit nicht manuell herbeigeführt werden muss.

Weiters ist es denkbar das Befestigungselement 2 ohne Grundkörper 2.1 auszuführen bzw. diesen unter dem Träger 3 anzuordnen. Wodurch die zusätzliche Biegung des Ährenhebers nach oben erst durch Anliegen der Unterseite des Mähfingers 7 am Träger 3 begrenzt wäre.

## Patentansprüche

1. Ährenheber welcher mittels Vorspannung an einem Mähfinger eines Mähwerks einer fahrbaren Erntemaschine anlegbar ist, wobei der Ährenheber aus einem Rampenteil (4), einem unterhalb des Rampenteils (4) verlaufenden Träger (3), und einem mit dem Träger (3) verbundenem Befestigungselement (2) gebildet ist, wobei der Träger (3) im montierten Zustand des Ährenhebers mit seinem hinteren Ende an der Erntemaschine festgelegt ist und sich vom Mähwerk der fahrbaren Erntemaschine aus vorwiegend in Fahrtrichtung nach vorne erstreckt und wobei das Befestigungselement (2) zwei Schenkel (2.3, 2.4) und einen diese am oberen Ende verbindenden Steg (2.2) aufweist, wobei der Mähfinger (7) der Erntemaschine im montierten Zustand des Ährenhebers zwischen die Schenkel (2.3, 2.4) eingeführt ist, **dadurch gekennzeichnet, dass**
zwischen den beiden Schenkeln (2.3, 2.4) des Befestigungselements (2) ein Exzenterspanner (1) drehbar bezüglich eines Schwenkbolzens (6) gelagert ist,
der Exzenterspanner (1) eine Auflagefläche (1.1) aufweist, der Exzenterspanner (1) eine Sperrfläche (1.2) aufweist, die am selben Hebelarm (1.4) des Exzenterspanners (1) gegenüberliegend zur Auflagefläche (1.1) angeordnet ist,
das Befestigungselement (2) eine Stützfläche (2.5) aufweist, die derart im Schwenkbereich des Exzenterspanners (1) gelegen ist, dass ein weiteres Schwenken des Exzenterspanners (1) dadurch unterbunden ist, dass die Sperrfläche (1.2) an der Stützfläche (2.5) anliegt,
wobei im montierten Zustand des Ährenhebers die Auflagefläche (1.1) unter Vorspannung des Trägers (3) am Mähfinger (7) der Erntemaschine anliegt und die Sperrfläche (1.2) an der Stützfläche (2.5).

2. Ährenheber nach Anspruch 1, **dadurch gekennzeichnet, dass** der Exzenterspanner (1) durch eine Feder (5), deren Federkraft in Umfangsrichtung des Schwenkbolzen (6) wirkt, mit der Sperrfläche (1.2) gegen die Stützfläche (2.5) gedrückt wird.

3. Ährenheber nach Anspruch 2, **dadurch gekennzeichnet, dass** die Feder (5) als Torsionsfeder ausgeführt ist, deren Windungen um den Schwenkbolzen (6) verlaufen und deren erster Schenkel am Befestigungselement (2) abgestützt ist und deren zweiter Schenkel am Exzenterspanner (1) abgestützt ist.

4. Ährenheber nach einem der Ansprüche 1 bis 3, **dadurch gekennzeichnet, dass** der Schwenkbolzen (6) als Spannstift ausgeführt ist und der Exzenterspanner (1) drehbar an diesem gelagert ist.

5. Ährenheber nach einem der Ansprüche 1 bis 4, **dadurch gekennzeichnet, dass** der Exzenterspanner (1) einen zweiten Hebelarm (1.3) aufweist, der vorzugsweise als Spannhahn ausgebildet ist und als Angriffspunkt zur Bedienung des Exzenterspanners (1) durch einen Benutzer dient.

6. Ährenheber nach einem der Ansprüche 1 bis 5, **dadurch gekennzeichnet, dass** das Befestigungselement (2) an seinem oberen Ende mit dem Rampenteil (4) verbunden ist.

7. Ährenheber nach Anspruch 6, **dadurch gekennzeichnet, dass** er eine Verschleißplattierung aufweist, welche sich vom Befestigungselement (2) bis zum Rampenteil (4) erstreckt und die Kontaktfläche des Ährenhebers mit dem Boden bildet.

8. Ährenheber nach einem der Ansprüche 6 bis 7, **dadurch gekennzeichnet, dass** der Rampenteil (4), die Verschleißplattierung und das Befestigungselement (2) aus einem monolithischen Kunststoffteil, insbesondere einem verschleißfesten Kunststoffteil gebildet sind.

9. Ährenheber nach einem der Ansprüche 6 bis 8, **dadurch gekennzeichnet, dass** der Träger (3) aus Federstahl oder einer anderen Metalllegierung gebildet ist, wobei das vordere Ende des Trägers (3) den vordersten Eingriffspunkt des Ährenhebers bildet.

## Claims

1. Crop lifter which by means of a pretensioning device can be laid against a mowing finger of a mowing attachment of a mobile harvester, wherein the crop lifter is formed from a ramp section (4), a support (3) running underneath the ramp section (4) and a fastening element (2) connected to the support (3), wherein the support (3) is fixed with its rear end to the harvester when the crop lifter is assembled and extends forwards from the mowing attachment of the mobile harvester predominantly in the direction of travel and wherein the fastening element (2) has two legs (2.3, 2.4) and a bridge (2.2) connecting these at the upper end, wherein the mowing finger (7) of the harvester is introduced between the legs (2.3, 2.4) when the crop lifter is assembled,
**characterised in that**
an eccentric tensioner (1) is mounted rotatably with respect to a pivot bolt (6) between the two legs (2.3, 2.4) of the fastening element (2),
the eccentric tensioner (1) has a supporting surface (1.1), the eccentric tensioner (1) has a locking surface (1.2) which is arranged on the same lever arm (1.4) of the eccentric tensioner (1) opposite the supporting surface (1.1),
the fastening element (2) has a support surface (2.5) which is located in the pivoting range of the eccentric tensioner (1) in such a way that further pivoting of the eccentric tensioner (1) is prevented by the fact that the locking surface (1.2) rests against the support surface (2.5),
wherein with the crop lifter mounted, the supporting surface (1.1) rests against the mowing finger (7) of the harvester while the support (3) is pretensioned, and the locking surface (1.2) rests against the support surface (2.5).

2. Crop lifter according to claim 1, **characterised in that** the eccentric tensioner (1) is pressed against the support surface (2.5) with the locking surface (1.2) by a spring (5) whose spring force acts in the circumferential direction of the pivot bolt (6).

3. Crop lifter according to claim 2, **characterised in that** the spring (5) is designed as a torsion spring whose windings run around the pivot bolt (6) and whose first leg is supported on the fastening element (2) and whose second leg is supported on the eccentric tensioner (1).

4. Crop lifter according to one of claims 1 to 3, **characterised in that** the pivot bolt (6) is designed as a tensioning pin and the eccentric tensioner (1) is rotatably mounted on the latter.

5. Crop lifter according to one of claims 1 to 4, **characterised in that** the eccentric tensioner (1) has a second lever arm (1.3) which is preferably designed as a trigger lever and serves as a point of application for operating the eccentric tensioner (1) by a user.

6. Crop lifter according to one of claims 1 to 5, **characterised in that** the fastening element (2) is connected at its upper end to the ramp section (4).

7. Crop lifter according to claim 6, **characterised in that** it has a wear plating which extends from the fastening element (2) to the ramp section (4) and forms the contact surface of the crop lifter with the ground.

8. Crop lifter according to one of claims 6 to 7, **characterised in that** the ramp section (4), the wear plating and the fastening element (2) are formed from a monolithic plastic part, in particular a wear-resistant plastic part.

9. Crop lifter according to one of claims 6 to 8, **characterised in that** the support (3) is formed from spring steel or another metal alloy, wherein the front end of the support (3) forms the foremost point of engagement of the crop lifter.

## Revendications

1. Releveur d'épis pouvant être placé sur un doigt de coupe d'un dispositif de coupe d'une moissonneuse au moyen d'une précontrainte, ledit releveur d'épis étant constitué d'une portion à rampe (4), d'un support (3) passant sous la portion à rampe (4), et d'un élément de fixation (2) relié au support (3), ledit support (3) étant fixé, à l'état monté du releveur d'épis, par son extrémité arrière sur la moissonneuse et s'étendant essentiellement dans le sens de déplacement vers l'avant depuis le dispositif de coupe de la moissonneuse mobile et l'élément de fixation (2) présentant deux bras (2.3, 2.4) et une bride (2.2) qui y est reliée sur l'extrémité supérieure, le doigt de coupe (7) de la moissonneuse étant inséré, à l'état monté du releveur d'épis, entre les bras (2.3, 2.4), **caractérisé en ce**
**qu'**un tendeur excentrique (1) rotatif par rapport à une tige de pivotement (6) est logé entre les deux bras (2.3, 2.4) de l'élément de fixation (2),
**que** le tendeur excentrique (1) présente une surface d'appui (1.1),
**que** le tendeur excentrique (1) présente une surface de blocage (1.2) disposée sur le même bras de levier (1.4) du tendeur excentrique (1) à l'opposé de la surface d'appui (1.1),
**que** l'élément de fixation (2) présente une surface de support (2.5) placée d'une telle façon dans la zone de pivotement du tendeur excentrique (1) qu'un pivotement ultérieur du tendeur excentrique (1) est bloqué, que la surface de blocage (1.2) repose sur la surface de support (2.5),
**qu'**à l'état monté du releveur d'épis, la surface d'appui (1.1) repose sous la précontrainte du support (3) sur le doigt de coupe (7) de la moissonneuse et la surface de blocage (1.2) sur la surface de support (2.5).

2. Releveur d'épis selon la revendication 1, **caractérisé en ce que** le tendeur excentrique (1) est comprimé avec la surface de blocage (1.2) contre la surface de support (2.5) par un ressort (5) dont l'effort agit dans la direction circonférentielle de la tige de pivotement (6).

3. Releveur d'épis selon la revendication 2, **caractérisé en ce que** le ressort (5) est conçu comme ressort de torsion, dont les spires cheminent autour de la tige de pivotement (6) et dont le premier bras est soutenu sur l'élément de fixation (2) et dont le deuxième bras est soutenu sur le tendeur excentrique (1).

4. Releveur d'épis selon l'une des revendications 1 à 3, **caractérisé en ce que** la tige de pivotement (6) est conçue comme goupille de serrage et que le tendeur excentrique (1) est monté rotatif sur celle-ci.

5. Releveur d'épis selon l'une des revendications 1 à 4, **caractérisé en ce que** le tendeur excentrique (1) présente un deuxième bras de levier (1.3) étant conçu de préférence comme robinet de serrage et servant de point d'engagement pour l'utilisation du tendeur excentrique (1) par un utilisateur.

6. Releveur d'épis selon l'une des revendications 1 à 5, **caractérisé en ce que** l'élément de fixation (2) est relié à son extrémité supérieure à la portion à rampe (4).

7. Releveur d'épis selon revendication 6, **caractérisé en ce qu'**il dispose d'un placage d'usure s'étendant de l'élément de fixation (2) jusqu'à la portion à rampe (4) et constituant la surface de contact du releveur d'épis avec le sol.

8. Releveur d'épis selon l'une des revendications 6 à 7, **caractérisé en ce que** la portion à rampe (4), le placage d'usure et l'élément de fixation (2) sont constitués d'une pièce en matière plastique monolithique, notamment d'une pièce en matière plastique résistant à l'usure.

9. Releveur d'épis selon l'une des revendications 6 à 8, **caractérisé en ce que** le support (3) est formé d'acier à ressort ou d'un autre alliage métallique, l'extrémité avant du support (3) constituant le point d'engagement du releveur d'épis.
